# EUROPEAN PATENT APPLICATION

(11) **EP 4 759 465 A1**
(43) Date of publication of application: **17.06.2026**
(21) Application number: 23948525.3
(22) Date of filing: 10.08.2023
(51) Int. Cl.: B23G 7/02, B21H 3/08, B21H 3/10

(54) **THREAD-FORMING TAP**

(71) Applicant: OSG Corporation, Aichi 442-0005 (JP)
(72) Inventor: MIZOGUCHI Tetsuya, Toyokawa-shi, Aichi 441-1231 (JP)
(74) Representative: TBK
(86) International application number: PCT/JP2023/029294
(87) International publication number: WO 2025/032813

(57) **Abstract**

A thread forming tap 10 has a thread part 14 including: a complete thread part 24; and a chamfer part 22 which is provided contiguous to the complete thread part 24 and which tapers towards the tip. A plurality of lobe parts 18 are provided on the thread part 14 in the circumferential direction. Each of the lobe parts 18 includes a pressing section 18a, a crest section 18b, and a relief section 18c. In the pressing section 18a of each lobe part 18, a mountain shape 28a in a cross-section including an axis-C direction of the thread forming tap 10 changes in the circumferential direction, so that the contact manner of the lobe part 18 with a working material improves, and cooling performance is improved. As a result of these, a highly durable thread forming tap 10 can be provided.

## Description

### TECHNICAL FIELD

The present invention relates to a thread forming tap, and more particularly to a thread forming tap that suffers from less wear and improved durability.

### BACKGROUND ART

There is known a thread forming tap including a thread portion that includes a complete thread part and a leading part, wherein the leading part is contiguous to the complete thread part and has a diameter that is reduced as the thread forming tap extends toward a distal end of the thread forming tap, and wherein the thread portion is provided with a plurality of lobes that are arranged at equal intervals in a circumferential direction of the thread forming tap (see Patent Document 1). This type of thread forming tap is screwed into a prepared hole formed in a workpiece by causing the leading part to be first introduced into the prepared hole, and then the plurality of lobes are caused to bite into an inner surface wall of the prepared hole, whereby the inner surface wall of the prepared hole is plastically deformed so as to form an internal thread without discharging cutting chips. Thus, it is possible to avoid problems such as chip clogging and chip wrapping. Further, it is possible to machine the internal thread having a high strength with a dimensional variation being suppressed. Moreover, it is possible to simplify an operation for removing the cutting chips from the machined internal thread.

### PRIOR ART DOCUMENTS

### PATENT DOCUMENTS

| | |
|---|---|
| [Patent Document 1] | JP 6420515B1 |
| [Patent Document 2] | JP2001-252827A |
| [Patent Document 3] | JP2004-001103A |

### DISCLOSURE OF THE INVENTION

### OBJECT TO BE ACHIEVED BY THE INVENTION

By the way, since the lobes of such a thread forming tap are brought into contact with the workpiece at a certain angle, the thread portion is likely to suffer from chipping and wear, which can shorten tool life of the thread forming tap. In view of such an issue, Patent Document 1 discloses a technique of reducing a load torque by gradually changing shape of cutting teeth in the leading part. Patent Document 2 discloses a technique of improving the tool life by forming the thread portion such that a root depth is the same and constant in the leading part and in the complete thread part. Patent Document 3 discloses a technique of reducing a thread forming resistance in areas in which thread chipping is likely to be caused, by making a crest cut-off height larger in the leading part greater than in the complete thread part. The techniques disclosed in Patent Documents 1-3 all define thread profile and gradient as being changed in an axial direction of the tap.

The present invention was made in view of the background discussed above. It is therefore an object of the present invention to provide a thread forming tap that is capable of improving durability by reducing load applied to a crest portion in each lobe when an internal thread is being formed by the thread forming tap.

### MEASURES FOR ACHIEVING THE OBJECT

For achieving the object, a first invention is, in (a) a thread forming tap comprising a thread portion that includes a complete thread part and a leading part, the leading part being contiguous to the complete thread part and having a diameter that is reduced as the thread forming tap extends toward a distal end of the thread forming tap, the thread portion being provided with a plurality of lobes that are arranged in a circumferential direction of the thread forming tap, characterized in that (b) each of the lobes includes a pressing portion, a maximum protrusion portion and a relief portion that are arranged in the circumferential direction, and (c) the thread portion has a thread profile in a cross section containing an axis of the thread forming tap, the thread profile being changed in the circumferential direction in at least one of the pressing portion and the relief portion of each of the lobes.

### EFFECTS OF THE INVENTION

The thread forming tap according to the first invention includes a thread portion that includes a complete thread part and a leading part, the leading part being contiguous to the complete thread part and having a diameter that is reduced as the thread forming tap extends toward a distal end of the thread forming tap, the thread portion being provided with a plurality of lobes that are arranged in a circumferential direction of the thread forming tap, wherein each of the lobes includes a pressing portion, a maximum protrusion portion and a relief portion that are arranged in the circumferential direction, and wherein the thread portion has a thread profile in a cross section containing an axis of the thread forming tap, the thread profile being changed in the circumferential direction in at least one of the pressing portion and the relief portion of each of the lobes. Thus, the screw thread can be shaped with an increased rigidity, thereby improving a manner of contact of the screw thread with a workpiece material. Further, it is possible to improve a cooling performance, thereby resulting in a highly durable thread forming tap.

A second invention is, in the thread forming tap according to the first invention, characterized in that the thread profile is changed in the circumferential direction in the pressing portion of each of the lobes. Thus, it is possible to further improve the manner of contact of the lobes with the workpiece material, and to further improve the cooling performance, thereby resulting in a highly durable thread forming tap.

A third invention is, in the thread forming tap according to the first or second invention, characterized in that a root-diameter relief amount is smaller than a crest-diameter relief amount in the thread portion. Thus, it is possible to prevents the roots from removing a part of a cross sectional shape of the screw thread and reducing a cross sectional area of the screw thread, thereby increasing rigidity and fracture strength of the tap. In addition, a flow of lubricating and cooling fluid (coolant) is less likely to be obstructed by the roots, thereby facilitating the fluid to be supplied to a machining point. Thus, it is possible to improve the cooling performance and resulting in a highly durable thread forming tap.

A fourth invention is, in the thread forming tap according to the first or second invention, characterized in that a crest-diameter relief amount is larger than an intermediate-diameter relief amount in the thread portion. Thus, it is possible to further improve the manner of contact of the lobes with the workpiece material, and to further improve the cooling performance, thereby resulting in a highly durable thread forming tap.

### BRIEF DESCRIPTION OF DRAWINGS

FIG. 1 is a front view showing construction of a thread forming tap of an embodiment of the present invention.
FIG. 2 is a cross sectional view of the thread forming tap of FIG. 1, taken in a plane that contains an axis C of the tap.
FIG. 3 is a set of views for explaining a cross sectional shape of a screw thread in a lobe of the thread forming tap of FIG. 1.
FIG. 4 is a view showing a range of change of a thread profile of a thread portion.
FIG. 5 is a set of views for explaining change of a thread profile in a lobe of a thread forming tap of a comparative example.
FIG. 6 is a set of views for explaining a relationship between the change of the thread profile and a rectangle in the thread forming tap of the comparative example.
FIG. 7 is a set of views for explaining a relationship between the change of the thread profile and a rectangle in the thread forming tap of the present embodiment.
FIG. 8 is a set of photographs showing the thread forming taps of the present embodiment and the comparative example before use.
FIG. 9 is a view showing results of tapping-durability comparative tests made for the thread forming taps of the present embodiment and the comparative example.
FIG. 10 is a set of photographs showing outer circumferential surfaces of the thread forming taps of the present embodiment and the comparative example after the tapping-durability comparative tests.
FIG. 11 is a set of views showing in enlargement wears in the lobes of the thread forming taps of the present embodiment and the comparative example.
FIG. 12 is a set of views corresponding to the views of FIG. 3, for explaining a cross sectional shape of a screw thread in a lobe of a thread forming tap of another embodiment of the present invention.
FIG. 13 is a set of views corresponding to the views of FIG. 3, for explaining a cross sectional shape of a screw thread in a lobe of a thread forming tap of still another embodiment of the present invention.
FIG. 14 is a set of views corresponding to the views of FIG. 3, for explaining a cross sectional shape of a screw thread in a lobe of a thread forming tap of still another embodiment of the present invention.
FIG. 15 is a set of views corresponding to the views of FIG. 3, for explaining a cross sectional shape of a screw thread in a lobe of a thread forming tap of still another embodiment of the present invention.
FIG. 16 is a set of views corresponding to the views of FIG. 3, for explaining a cross sectional shape of a screw thread in a lobe of a thread forming tap of still another embodiment of the present invention.
FIG. 17 is a set of views corresponding to the views of FIG. 3, for explaining a cross sectional shape of a screw thread in a lobe of a thread forming tap of still another embodiment of the present invention.

### MODES FOR CARRYING OUT THE INVENTION

Preferably, the screw thread has a substantially polygonal shape in cross section that is perpendicular to an axial direction of the tap, with the radially protruding margins being provided in positions corresponding to vertices of the polygonal shape, and with relief portions each having a smaller diameter than the margins being provided between the margins. For example, the screw thread has a substantially quadrangular shape in the cross section that is perpendicular to the axial direction of the tap, with the radially protruding margins being provided in the positions corresponding to the four vertices of the quadrangular shape. That is, the four radially protruding margins are arranged in the circumferential direction. However, the screw thread may also have a substantially triangular shape in the cross section that is perpendicular to the axial direction of the tap, with the radially protruding margins being provided in positions corresponding to three vertices of the triangular shape. Alternatively, it may have five or more radially protruding margins. Alternatively, it may have two radially protruding margins in opposite ends of a major axis of a substantially elliptical shape.

Preferably, in the thread forming tap, an oil groove is provided in an outer circumferential surface of the screw thread to extend in substantially parallel with the axis of the tap, so as to supply a cutting fluid to a machining area during a tapping operation by the tap. The oil groove is preferably provided in the thread forming tap where the tap has a relatively large diameter, but is not necessarily provided in the thread forming tap where the tap has a relatively small diameter.

Preferably, the thread forming tap preferably includes a cylindrical shank portion and a thread portion which is provided coaxially with the shank portion and which is contiguous to a distal end of the shank portion. The thread portion is preferably formed integrally with the shank portion, but may also be detachably attached to the shank portion when the tapping operation is to be performed. The thread forming tap is to be used, preferably, with the shank portion being attached to a machine tool such as a tapping machine.

Hereinafter, preferred embodiments of the present invention will be described in detail with reference to drawings. For the sake of convenience, the drawings used in the following description are not necessarily drawn to exact dimensional proportions.

### FIRST EMBODIMENT

The embodiments of the present invention will be described in detail with reference to the drawings.

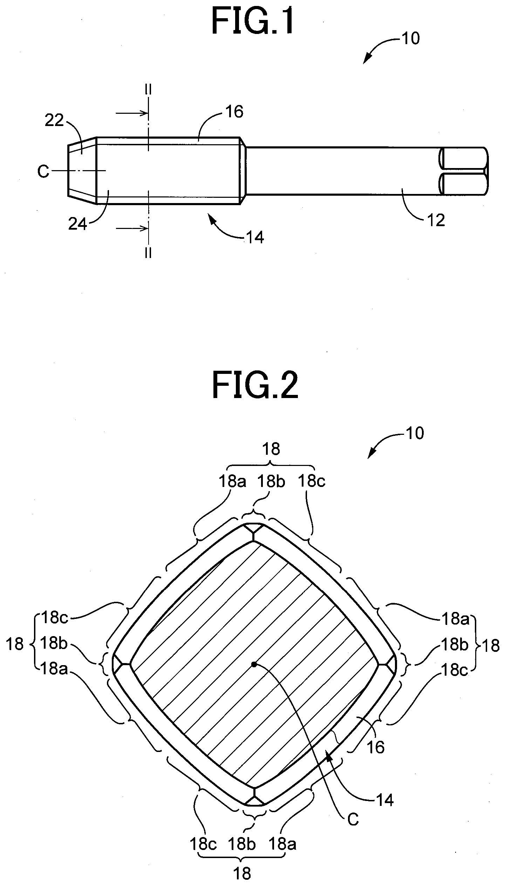

FIG. 1 is a front view for explaining a construction of a thread forming tap 10 of an embodiment of the present invention. FIG. 2 is a cross sectional view (i.e., cross sectional view taken along line II-II shown in FIG. 1) showing a part of the thread forming tap 10, taken in a plane that contains an axis C of the tap 10. As shown in FIGS. 1 and 2, the thread forming tap 10 of the present embodiment includes a shank portion 12 having a columnar shape (cylindrical shape) and a thread portion 14 integrally formed on a distal end side of the shank portion 12 and coaxially (on a common axis C) with the shank portion 12. A screw thread (external thread) 16 corresponding to an internal thread to be formed (internal thread to be machined by the thread forming tap 10) is formed on an outer circumferential surface of the thread portion 14. The thread portion 14 is preferably integrally formed with the shank portion 12, but may also be detachably attached to the shank portion 12. In the present embodiment, the thread portion 14 is integrally fixed to the shank portion 12 when machining the internal thread using the thread forming tap 10.

The screw thread 16 is provided with radially protruding lobes 18 arranged at equal intervals in a circumferential direction of the tap 10, and is formed to have an external thread shape extending along a helix corresponding to a predetermined lead angle. The lobes 18 correspond to portions that are caused to bite into a prepared hole (surface portion) of a workpiece when the internal thread is formed by the thread forming tap 10. In other words, the lobes 18 correspond to operating portions for plastically deforming the prepared hole of the workpiece when the internal thread is formed by the thread forming tap 10. The lobes 18 are projections (lobes, lands) that protrude radially outwardly to match a shape of the internal thread to be machined.

Each of the lobes 18 includes a leading part 18a, a maximum protrusion portion 18b and a relief portion 18c. Each of the pressing portion 18a and the relief portion 18c defines a diameter smaller than the maximum protrusion portion 18b. Since the lobes 18 are provided on the external thread, the pressing portions 18a, the maximum protrusion portion 18b and the relief portion 18c are located sequentially in a helical direction. As shown in FIG. 2, the screw thread 16 has a substantially rectangular shape (rectangular cross sectional shape) in a plane perpendicular to the axis C, such that the maximum protrusion portions 18b are located in four vertices of the rectangular shape, and such that each of the maximum protrusion portions 18b is located between a corresponding one of the pressing portions 18a and a corresponding one of the relief portions 18c in the circumferential direction. The pressing portions 18a and the relief portions 18c define a diameter smaller than the lobes 18.

As shown in FIG. 1, the thread portion 14 includes a leading part 22 tapered in diameter (diameter is gradually decreased toward a distal end of the thread forming tap 10) and a complete thread part 24 having a columnar shape (cylindrical shape) with a generally constant diameter. The leading part 22 is provided to roll-form the internal thread by being caused to bite into an inner circumferential surface of the prepared hole in the workpiece and to plastically deform the inner circumferential surface of the prepared hole during formation of the internal thread by the thread forming tap 10. The leading part 22 corresponds to several threads (e.g., 2 to 8 threads) from the distal end of the screw thread 16. The complete thread part 24 is provided to finish a surface of the internal thread formed by the leading part 22 during the formation of the internal thread by the thread forming tap 10, and to improve a self-guiding performance of the thread portion 14. The complete thread part 24 has a shape substantially the same as a shape of the internal thread that is formed by the thread forming tap 10. Although not specifically described in the present embodiment, the thread portion 14 may be provided with one or more oil grooves formed to extend in a direction parallel with the axis C. Alternatively, the thread portion 14 may be provided with an oil hole that is formed to extend in the direction parallel with the axis C.

The thread forming tap 10, which is constructed as described above, is used to perform an operation for forming (machining) the internal thread by being caused to bite into the inner circumferential surface of the prepared hole in the workpiece and to plastically deform the inner circumferential surface. For example, the thread forming tap 10 is fixed at the shank portion 12 to a tapping machine, and the tap 10 is rotated clockwise (as viewed from the shank portion 12) and moved axially toward the prepared hole in which the internal thread is to be formed, so that the thread portion 14 located on a distal end side of the shank portion 12 is screwed into the prepared hole, and the pressing portion 18a of each of the lobes 18 in the leading part 22 is pressed against the inner circumferential surface (surface layer portion) of the prepared hole, so as to plastically deform the inner circumferential surface, thereby roll-forming the internal thread. At the same time, the surface of the formed internal thread is finished by the complete thread part 24 following the leading part 22, whereby the target internal thread is formed in the prepared hole. The thread forming tap 10 is advantageously used for forming internal threads in highly ductile materials, and has an advantage of being able to form highly accurate internal threads without producing chips. However, a relatively large torque is applied to the thread forming tap 10 during formation of the internal thread.

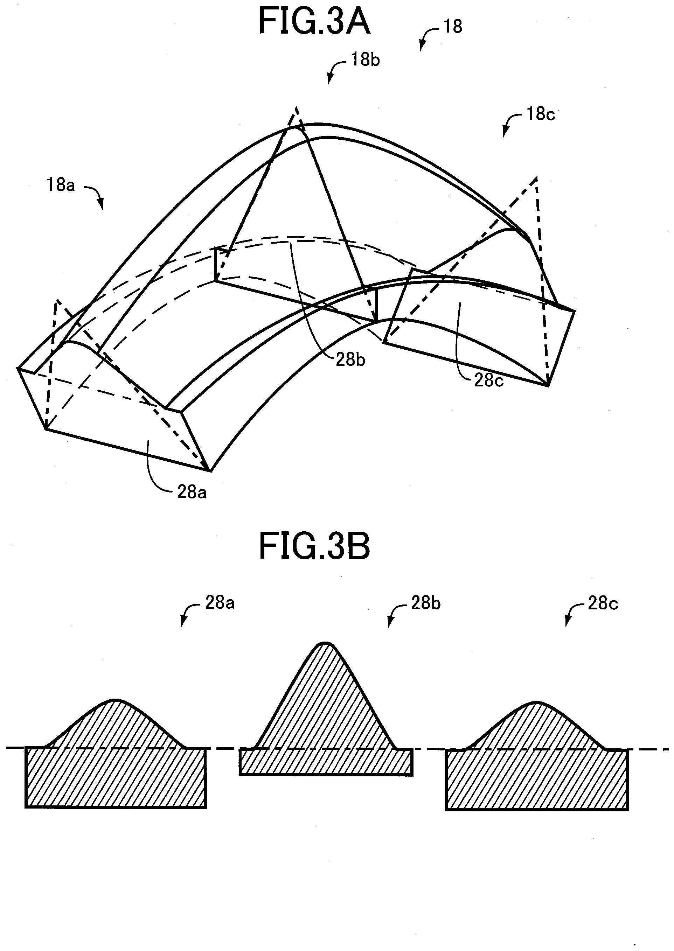

FIG. 3 is a set of views for explaining a cross sectional shape of the screw thread 16 in each of the lobes 18 of the thread forming tap 10. FIG. 3(a) is a view for explaining change of the cross sectional shape in each of the pressing portion 18a, maximum protrusion portion 18b and relief portion 18c that are contiguous in the circumferential direction of the tap 10. FIG. 3(b) is a view showing cross sections 28a, 28b, 28c in the respective pressing portion 18a, maximum protrusion portion 18b and relief portion 18c, taken in respective planes containing the axis C of the tap 10. In FIG. 3(b), a one-dot chain line represents a root diameter of the screw thread 16 in the maximum protrusion portion 18b, and indicates relative radial positional relationship among the cross sections 28a, 28b, 28c in the respective pressing portion 18a, maximum protrusion portion 18b and relief portion 18c from the axis C of the tap 10. In FIG. 3(a), a solid line represents a ridge line extending from the pressing portion 18a to the relief portion 18c through the maximum protrusion portion 18b.

In the thread forming tap 10 of the present embodiment, as shown in FIG. 3(a) and (b), the root diameter of the screw thread 16 is not changed, and a height of the screw thread 16 from a root 26 in each of the lobes 18 is increased in the pressing portion 18a in a direction toward the maximum protrusion portion 18b and is reduced in the relief portion 18c in a direction away from the maximum protrusion portion 18b. Thus, in each of the lobes 18, a thread profile 28 in the cross section containing the axis C of the thread forming tap 10 is changed in the circumferential direction in the pressing portion 18a and the relief portion 18c.

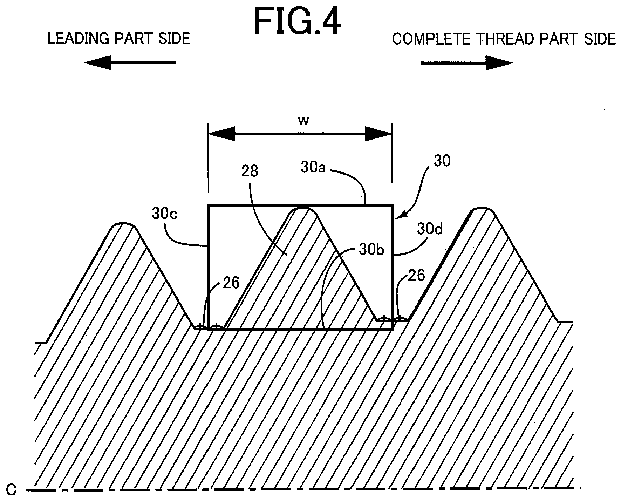

FIG. 4 is a view showing a range of change of the thread profile 28. The thread profile 28 shown in FIG. 4 is on the plane containing the axis C in the maximum protrusion portion 18b of each of the lobes 18. As shown in FIG. 4, the thread profile in the maximum protrusion portion 18b, which is surrounded by a rectangle 30, is an upper limit of the range of change of the thread profile 28 (i.e., maximum region of the thread profile 28). The rectangle 30 has a top edge 30a and a bottom edge 30b that are parallel with the axis C of the thread forming tap 10. The top edge 30a of the rectangle 30 is located in a position of a crest of the maximum protrusion portion 18b. The bottom edge 30b of the rectangle 30 is located in a position of one of the two roots 26 located on respective opposite sides of the maximum protrusion portion 18b, wherein the one of the two roots 26 is lower than the other and is closer to the axis C than the other. Further, as shown in FIG. 4, an axial length w of the rectangle 30 corresponds to a length of each of the top and bottom edges 30a, 30b. An axial distance between a left edge 30c of the rectangle 30 and a right edge 30d of the rectangle 30, which are located on side of the leading part 22 and on side of the complete thread part 24, respectively, corresponds to a pitch or lead of the screw thread 16. The left edge 30c is located in a center of the above-described one of the two roots 26 in the direction parallel to the axis C. The right edge 30d is located in a center of the other of the two roots 26 in the direction parallel to the axis C. The above definition is applied to the maximum protrusion portion 18b. In each of the pressing portion 18a and the relief portion 18c, the top edge 30a and the bottom edge 30b are located in a cross section containing the axis C and the crest of a corresponding one of the pressing portion 18a and the relief portion 18c. However, the distance between the top edge and bottom edge is assumed to be equal to the upper-bottom edge distance in the maximum protrusion portion 18b. Therefore, the change range in the pressing portion 18a and the relief portion 18c is equal to an area of the maximum protrusion portion 18b, and only the location of the change range is changed depending on the crest height.

As described above, in the present embodiment, in each of the lobes 18, the root diameter is not changed, and the height of the screw thread 16 from the root diameter is increased in the pressing portion 18a in the direction toward the maximum protrusion portion 18b and is reduced in the relief portion 18c in the direction away from the maximum protrusion portion 18b. Thus, each of the thread profile 28a of the pressing portion 18a and the thread profile 28c of the relief portion 18c is continuously changed in the circumferential direction. The maximized size of each of the changed thread profiles 28a, 28b is the thread profile 28b of the maximum protrusion portion 18b in each of the lobes 18. Therefore, the change of each of the thread profiles 28a, 28c in the respective pressing portion 18a and relief portion 18c is made within the rectangle 30 that is defined based on the thread profile 28b of the maximum protrusion portion 18b. The change of each of the thread profiles 28a, 28c is a continuous change. However, the change of each of the thread profiles 28a, 28c may include a discontinuous change, for example, where the screw thread 16 locally disappears due to oil grooves provided in the tap 10.

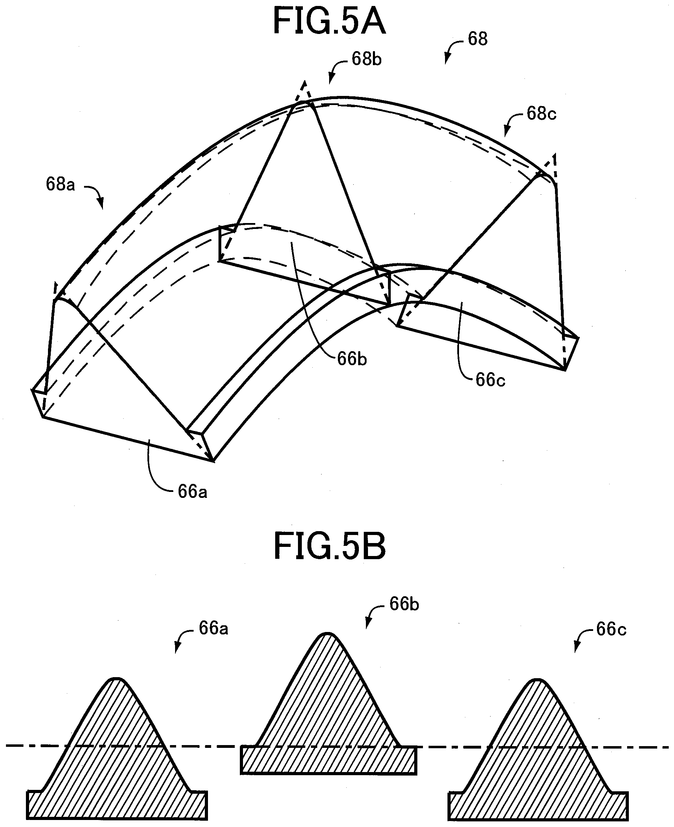

FIG. 5 is a set of views corresponding to the views of FIG. 3, for explaining change of a thread profile 66 of each of lobes 68 of a thread forming tap 60 of a comparative example. As in FIG. 3, FIG.5(a) is a view for explaining change of the cross sectional shape in each of a pressing portion 68a, a maximum protrusion portion 68b and a relief portion 68c that are contiguous in the circumferential direction of the tap, and FIG. 5(b) is a view showing cross sections in the respective pressing portion 68a, maximum protrusion portion 68b and relief portion 68c, taken in respective planes containing the axis C of the tap 60. As in FIG. 3(b), in FIG. 5(b), a one-dot chain line represents a root diameter of the screw thread in the maximum protrusion portion 18b, and indicates relative radial positional relationship among the cross sections 28a, 28b, 28c in the respective pressing portion 18a, maximum protrusion portion 18b and relief portion 18c from the axis C of the tap. In each of the lobes 68 of the thread forming tap 60 of the comparative example, the root diameter of the screw thread in other portions (such as relief portion) other than the maximum protrusion portion 68b is made smaller than the root diameter of the maximum protrusion portion 18b. However, the difference between the crest diameter and the root diameter is substantially the same in the pressing portion 68a, maximum protrusion portion 68b and relief portion 68c.

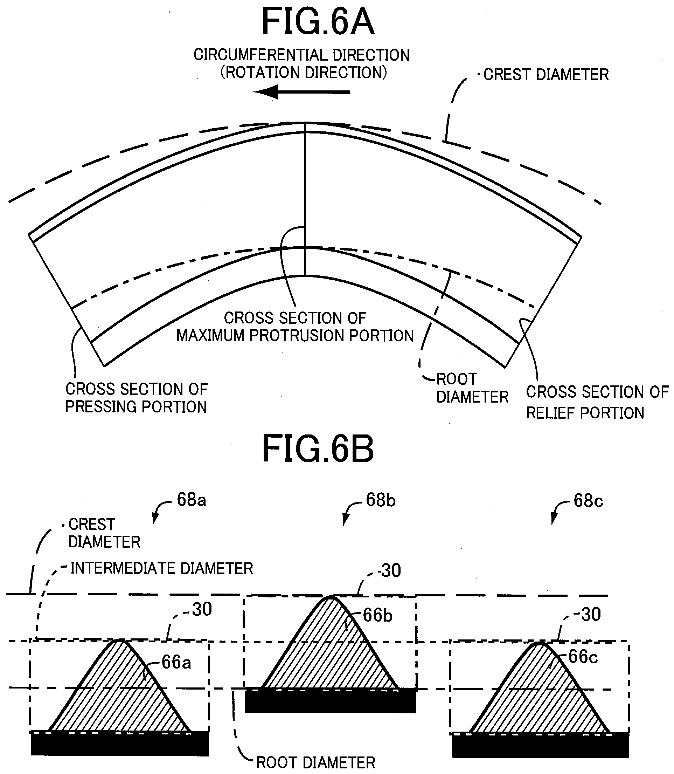

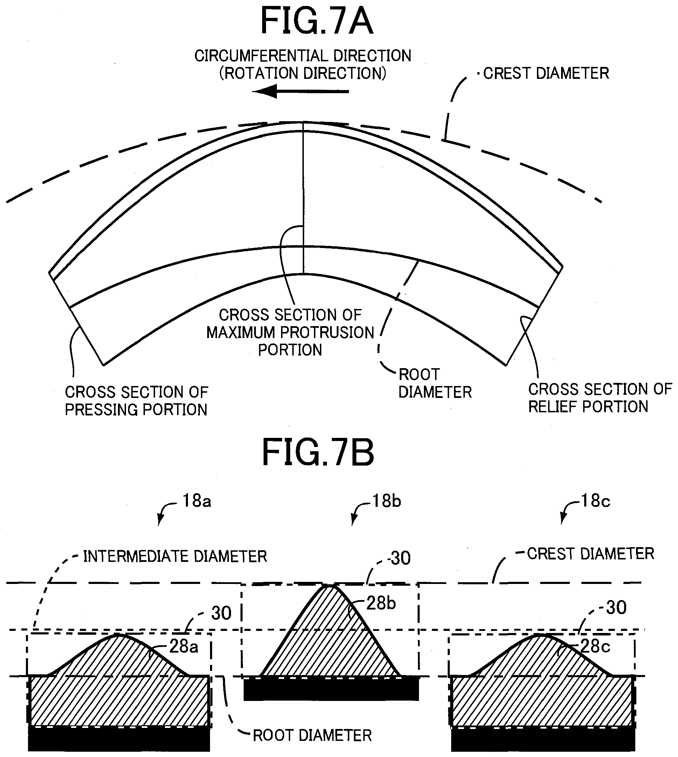

FIG. 6 is a set of views for explaining a relationship between the change of the thread profile 66 and the rectangle 30 in the thread forming tap 60 of the comparative example. FIG. 7 is a set of views for explaining a relationship between the change of the thread profile 26 and the rectangle 30 in the thread forming tap 10 of the present embodiment. FIG. 6(b) is a view corresponding to the view of FIG. 5(b), for explaining change of the thread profile 66 of the thread forming tap 60 of the comparative example. FIG. 6(a) is a cross sectional view taken in a plane perpendicular to the axis of the tap 60 and showing in enlargement one of the lobes. FIG. 6(a) shows positions of the respective thread profiles 66a, 66b, 66c of the tap 60, which are shown in FIG. 6(b). FIG. 7(b) is a view corresponding to the view of FIG. 3(b), for explaining change of the thread profile 26 of the thread forming tap 10 of the present embodiment. FIG. 7(a) is a cross sectional view taken in a plane perpendicular to the axis of the tap 10 and showing in enlargement one of the lobes. FIG. 7(a) shows positions of the respective thread profiles 28a, 28b, 28c of the tap 10, which are shown in FIG. 7(b). It is noted that black painted areas in FIG. 6(b) and FIG. 7(b) indicate areas that are outside the scope of the definition of the shape change.

In each of FIG. 6 and FIG. 7, broken line represents a crest diameter, dotted line represents an intermediate diameter, and one-dot chain line represents a root diameter. The crest diameter is a diameter of an imaginary cylinder which is in contact with the crest of the screw thread of the tap and which is coaxial with the axis of the tap, in the cross section of the maximum protrusion portion containing the axis of the tap. The intermediate diameter is a diameter of an imaginary cylinder in which a width of the screw thread is equal to a width of a thread groove and which is coaxial with the axis of the tap, in the cross section of the maximum protrusion portion containing the axis of the tap. The root diameter is a diameter of an imaginary cylinder which is in contact with the root of the screw thread and which is coaxial with the axis of the tap, in the cross section of the maximum protrusion portion containing the axis of the tap. Further, the rectangle 30 corresponding to the thread profile in the maximum protrusion portion is represented by tow-dot chain line. In the thread forming tap 60 of the comparative example, as shown in FIG. 6(b), the thread profile 66 is unchanged within the rectangle 30 before and after the maximum protrusion portion 68b. On the other hand, in the thread forming tap 10 of the present embodiment, as shown in FIG. 7(b), the thread profile 28 is changed within the rectangle 30 before and after the maximum protrusion portion 18b.

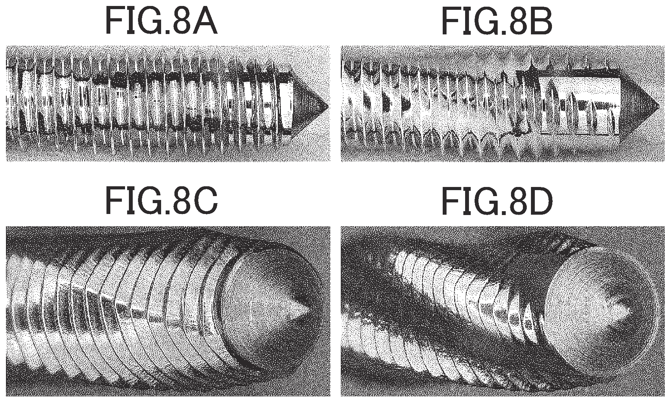

FIG. 8 is a set of photographs showing the thread forming tap 10 of the present embodiment and the thread forming tap 60 of the comparative example before they are used. FIG. 8(a) shows an outer circumferential surface of the thread forming tap 60 of the comparative example. FIG. 8(b) shows an outer circumferential surface of the thread forming tap 10 of the present embodiment. FIG. 8(c) is an oblique photograph of a distal end portion of the thread forming tap 60 of the comparative example. FIG. 8(d) is an oblique photograph of a distal end portion of the thread forming tap 10 of the present embodiment.

There will be next described results of durability tests of the thread forming tap 10, which were conducted by the present inventor and his collaborators.

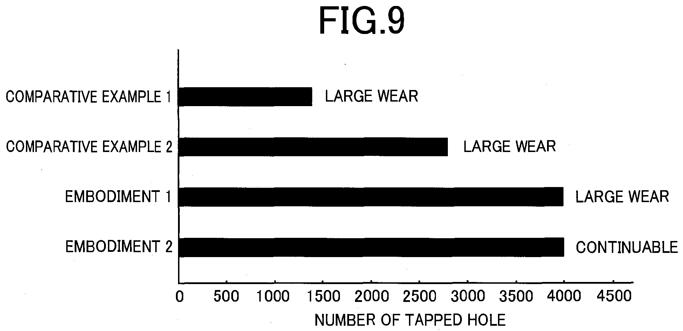

FIG. 9 shows the results of the comparative tapping-durability tests conducted on two samples of the thread forming tap 10 of the present embodiment and two samples of the thread forming tap 60 of the comparative example, by using a common workpiece material. In the tests, tapping was performed by the two samples of the thread forming tap 10 of the present embodiment and the two samples of the thread forming tap 60 of the comparative example under the following test condition. The formed internal threads were then checked by using a plug gauge, and the numbers of holes tapped by the respective samples before the plug gauge could no longer be passed through (GP-OUT) were compared. The tests were conducted for the two samples of the thread forming taps 10 of the present embodiment and the two samples of the thread forming tap 60 of the comparative example

### [Test Condition]

· Workpiece material: Carbon steel S50C (JIS)
· Cutting speed: 10 m/min
· Hole depth: 12 mm
· Prepared hole diameter: 5.54 mm
· Prepared hole shape: Blind hole
. Used machine: Vertical machining center
· Cutting fluid: Water-soluble oil
· Tap size: M6 × 1.0 (4 lobe)

As shown in FIG. 9, the two samples of the thread forming tap 60 of the comparative example wore out and the formed internal thread was in gauge-out failure, after approximately 1400 holes and 2800 holes, respectively. In the two samples of the thread forming tap 10 of the present embodiment, one of the two samples wore out and the formed internal thread was in the gauge-out failure, after approximately 4000 holes, and the other did not wear out and was able to continue machining the internal thread, even after 4000 holes. As such, the thread forming tap 10 of the present embodiment has significantly improved wear resistance. It is noted that a tool base material for the thread forming tap 10 of the present embodiment is molten HSS (High Speed Steel: high-speed tool steel) with a hardness of 64HRC, while a tool base material for the thread forming tap 60 of the comparative example is powder HSS (High Speed Steel: high-speed tool steel) with a hardness of 67HRC.

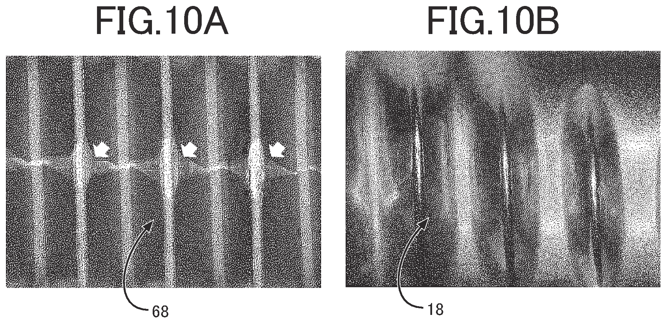

FIG. 10 is a set of photographs showing outer circumferential surfaces of the thread forming tap 10 of the present embodiment and the thread forming tap 60 of the comparative example when the tapping-durability comparative tests were conducted. FIG. 10(a) shows the outer circumferential surface of the thread forming tap 60 of the comparative example after having tapped 1400 holes. As indicated by arrows in FIG. 10(a), the lobes 68 has worn significantly and has reached its endurance limit. FIG. 10(b) shows the outer circumferential surface of the thread forming tap 10 of the present embodiment after having tapped 2800 holes. No wear is observed on the lobes 18.

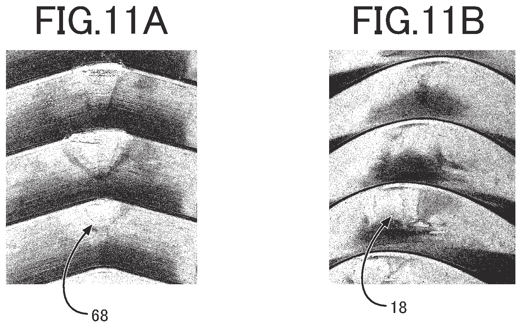

FIG. 11 is a set of views showing in enlargement wears in the lobes 18 of an example of the thread forming tap 10 of the present embodiment and in the lobes 68 of the thread forming tap 60 of the comparative example, after 4000 holes and 1400 holes, respectively. In the example of the thread forming tap 10, an amount of change of the crest diameter is larger than an amount of change of intermediate diameter. FIG. 11(a) shows the lobes 68 of the comparative thread forming tap 60 of the comparative example, wherein wear is concentrated in a crest portion of each lobe 68, with particularly severe wear being observed in the crest portion of the lobe 68 in a part of the leading part which is close to the complete thread part. FIG. 11(b) shows the lobes 18 of the thread forming tap 10 of the present embodiment, wherein wear marks are not concentrated in a crest portion of each lobe 18 and are dispersed over wide areas of flank surfaces. In the lobes 18 of the thread forming tap 10 of the present embodiment, it can be seen that contact pattern of the pressing portion 18a of each lobe 18 with the workpiece is improved and that the load is dispersed rather than being concentrated in the crest portion of each lobe 18.

The thread forming tap 10 of the present embodiment includes the thread portion 14 that includes the complete thread part 24 and the leading part 22. The leading part 22 is contiguous to the complete thread part 24, and had the diameter that is reduced as the thread forming tap 10 extends toward the distal end of the thread forming tap 10. The thread portion 14 is provided with the plurality of lobes 18 that are arranged in the circumferential direction of the thread forming tap 10, wherein each of the lobes 18 includes the pressing portion 18a, the maximum protrusion portion 18b and the relief portion 18c that are arranged in the circumferential direction, and wherein the thread portion 14 has the thread profile 28 in the cross section containing the axis C of the thread forming tap 10. The thread profile 28 is changed in the circumferential direction in at least the pressing portion 18a of each of the lobes 18. Thus, the screw thread has an increased rigidity, thereby making it possible to suppress vibration during machining of the internal thread. Further, it is possible to improve a cooling performance, thereby resulting in a highly durable thread forming tap 10.

Further, in the thread forming tap 10 of the present embodiment, the thread profile 28 is changed in the circumferential direction also in the relief portion 18c of each of the lobes 18. Thus, it is possible to assure a sufficient amount of relief amount without reducing the rigidity of the screw thread and to improve the cooling performance, thereby resulting in a highly durable thread forming tap 10.

Further, in the thread forming tap 10 of the present embodiment, the crest-diameter relief amount is larger than the root-diameter relief amount in the thread portion 14. Thus, a flow of lubricating and cooling fluid (coolant) is less likely to be obstructed, thereby facilitating supply of the fluid. Thus, it is possible to improve the cooling performance and resulting in a highly durable thread forming tap 10.

Further, in the thread forming tap 10 of the present embodiment, the crest-diameter relief amount is larger than the intermediate-diameter relief amount in the thread portion 14. Thus, it is possible to further improve the manner of contact of the lobes 18 with the workpiece material, and to further improve the cooling performance, thereby resulting in a highly durable thread forming tap 10.

There will be next described other embodiments of the present invention. In the following description, parts common to the embodiments are designated by the same reference signs and will not be described.

### SECOND EMBODIMENT

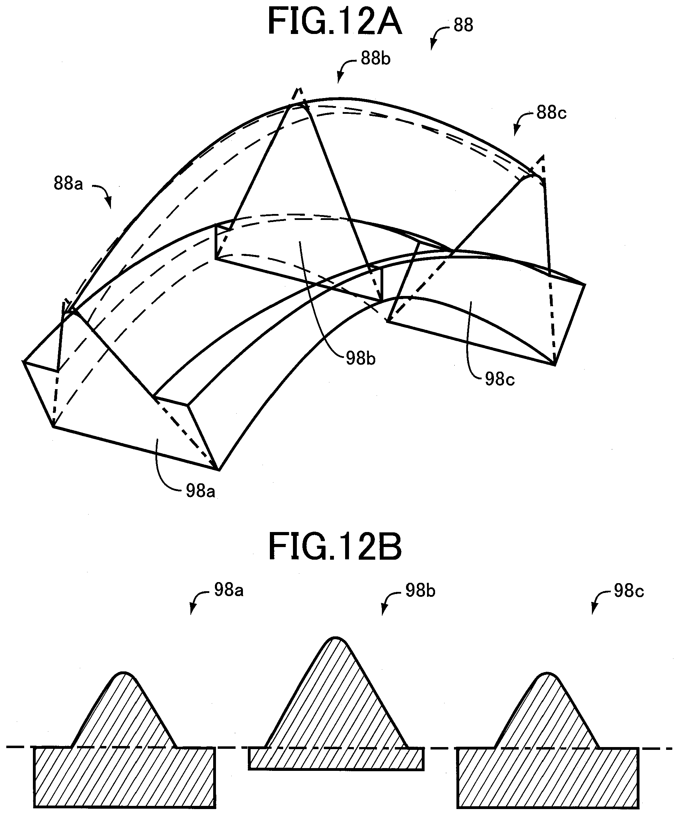

FIG. 12 is a set of views corresponding to the views of FIG. 3 in the above-described first embodiment, for explaining a cross sectional shape 98 of each lobe 88 in another embodiment of the present invention. FIG. 12(a) is a view for explaining change of the cross sectional shape in each of the pressing portion 88a, maximum protrusion portion 88b and relief portion 88c that are contiguous in the circumferential direction of the tap. FIG. 12(b) is a view showing cross sections 98a, 98b, 98c in the respective pressing portion 88a, maximum protrusion portion 88b and relief portion 88c, taken in respective planes containing the axis C of the tap. As in FIG. 3(b), in FIG. 12(b), a one-dot chain line represents a root diameter of the screw thread in the maximum protrusion portion 88b, and indicates relative radial positional relationship among the cross sections 98a, 98b, 98c in the respective pressing portion 88a, maximum protrusion portion 88b and relief portion 88c from the axis C of the tap.

As shown in FIG. 12, in each lobe 88 in this second embodiment, an angle of the crest portion of the thread profile 98 having a triangular shape is unchanged, while an amount of protrusion of the thread profile 98 from the root diameter is increased in the pressing portion 88a in a direction toward the maximum protrusion portion 88b and is reduced in the relief portion 88c in a direction away from the maximum protrusion portion 88b. Thus, the thread profile 98 having a triangular shape protrudes the most in the maximum protrusion portion 88b.

In this second embodiment in which the thread forming tap 10 has the lobes 118, it is possible to obtain the same effect as in the above-described first embodiment.

### THIRD EMBODIMENT

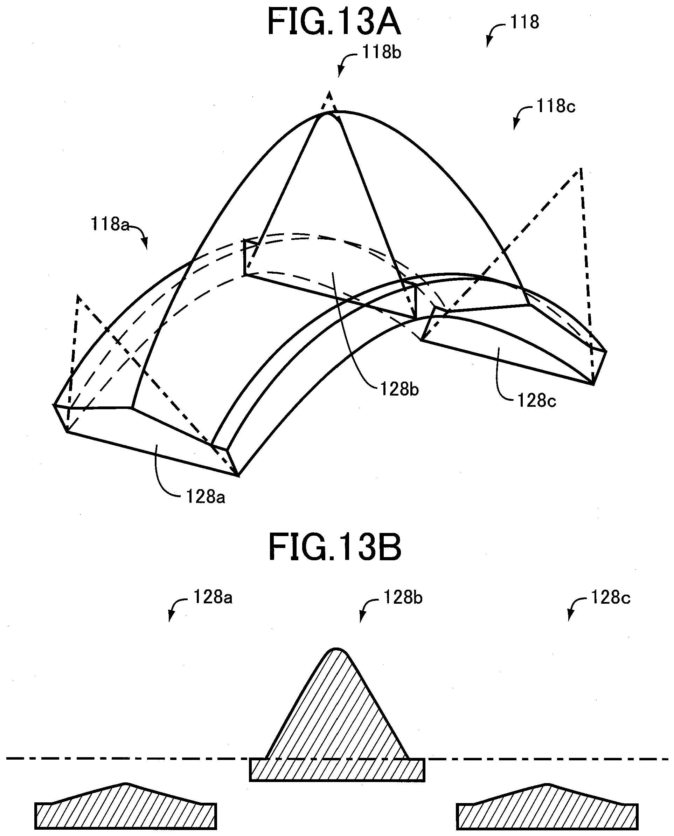

FIG. 13 is a set of views corresponding to the views of FIG. 3 in the above-described first embodiment, for explaining a cross sectional shape 128 of each lobe 118 in another embodiment of the present invention. FIG. 13(a) is a view for explaining change of the cross sectional shape in each of the pressing portion 128a, maximum protrusion portion 128b and relief portion 128c that are contiguous in the circumferential direction of the tap. FIG. 13(b) is a view showing cross sections 128a, 128b, 128c in the respective pressing portion 128a, maximum protrusion portion 128b and relief portion 128c, taken in respective planes containing the axis C of the tap. As in FIG. 3(b), in FIG. 13(b), a one-dot chain line represents a root diameter of the screw thread in the maximum protrusion portion 118b, and indicates relative radial positional relationship among the cross sections 128a, 128b, 128c in the respective pressing portion 118a, maximum protrusion portion 118b and relief portion 118c from the axis C of the tap.

As shown in FIG. 13, in each lobe 118 in this third embodiment, an angle of the crest portion of the thread profile 128 having a triangular shape is changed such that the thread profile 128a in the pressing portion 118a is changed in a direction toward the maximum protrusion portion 118b and such that the thread profile 128a in the relief portion 128c is changed in a direction away from the maximum protrusion portion 118b. Thus, the angle of the crest portion of the thread profile 128 is the sharpest in the maximum protrusion portion 118b.

In this third embodiment in which the thread forming tap 10 has the lobes 118, it is possible to obtain the same effect as in the above-described first embodiment.

### FOURTH EMBODIMENT

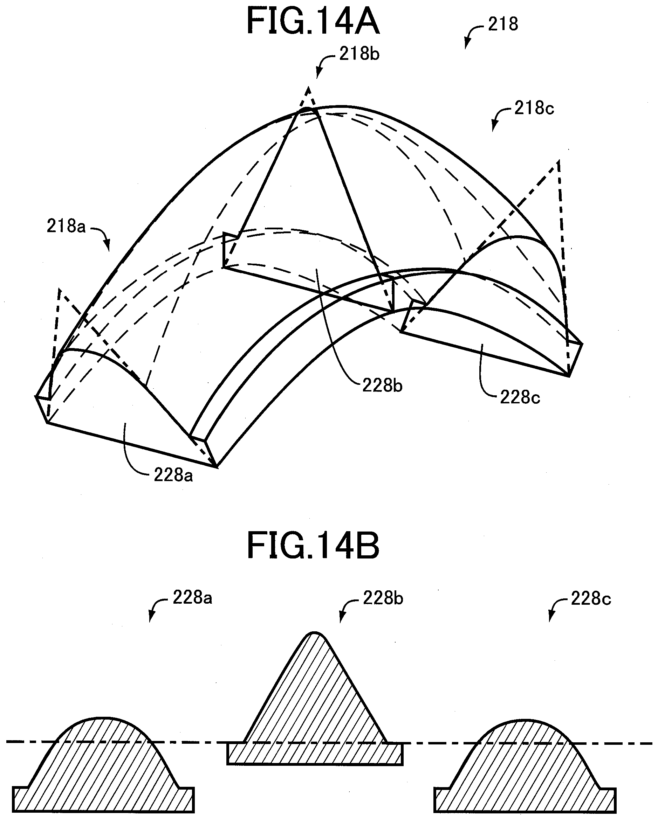

FIG. 14 is a set of views corresponding to the views of FIG. 3 in the above-described first embodiment, for explaining a cross sectional shape 228 of each lobe 218 in another embodiment of the present invention. FIG. 14(a) is a view for explaining change of the cross sectional shape in each of the pressing portion 228a, maximum protrusion portion 228b and relief portion 228c that are contiguous in the circumferential direction of the tap. FIG. 14(b) is a view showing cross sections 228a, 228b, 228c in the respective pressing portion 228a, maximum protrusion portion 228b and relief portion 228c, taken in respective planes containing the axis C of the tap. As in FIG. 3(b), in FIG. 14(b), a one-dot chain line represents a root diameter of the screw thread in the maximum protrusion portion 218b, and indicates relative radial positional relationship among the cross sections 228a, 228b, 228c in the respective pressing portion 218a, maximum protrusion portion 218b and relief portion 218c from the axis C of the tap.

As shown in FIG. 14, in each lobe 218 in this fourth embodiment, the thread profile 228 having a substantially triangular shape has a curved portion in the crest, and a radius of curvature of the curved portion is changed such that thread profile 228a in the pressing portion 218a is changed in a direction toward the maximum protrusion portion 218b and such that the thread profile 228a in the relief portion 228c is changed in a direction away from the maximum protrusion portion 218b. The radius of curvature of the crest portion of the thread profile 228 is minimized in the maximum protrusion portion 218b.

In this fourth embodiment in which the thread forming tap 10 has the lobes 218, it is possible to obtain the same effect as in the above-described first embodiment.

### FIFTH EMBODIMENT

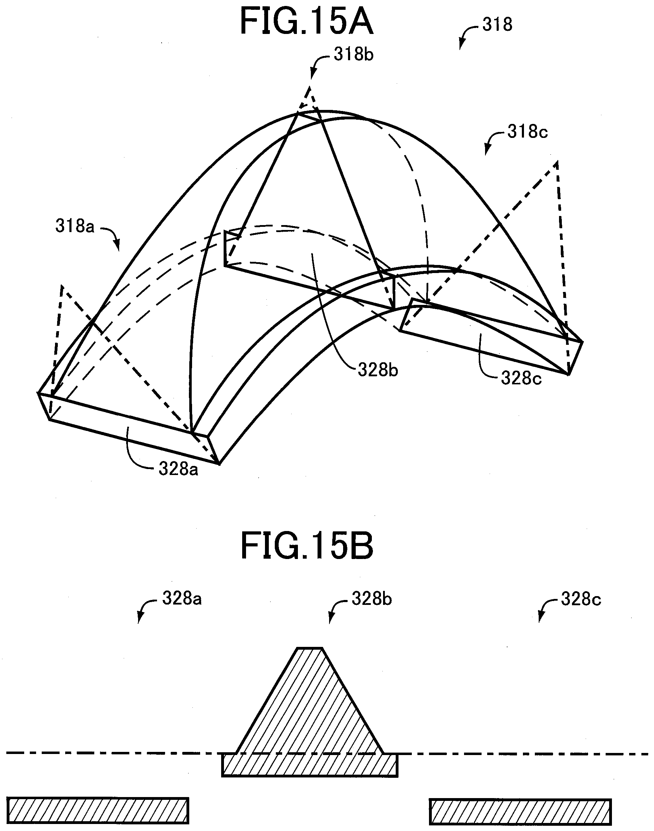

FIG. 15 is a set of views corresponding to the views of FIG. 3 in the above-described first embodiment, for explaining a cross sectional shape 328 of each lobe 318 in another embodiment of the present invention. FIG. 15(a) is a view for explaining change of the cross sectional shape in each of the pressing portion 328a, maximum protrusion portion 328b and relief portion 328c that are contiguous in the circumferential direction of the tap. FIG. 15(b) is a view showing cross sections 328a, 328b, 328c in the respective pressing portion 328a, maximum protrusion portion 328b and relief portion 328c, taken in respective planes containing the axis C of the tap. As in FIG. 3(b), in FIG. 15(b), a one-dot chain line represents a root diameter of the screw thread in the maximum protrusion portion 318b, and indicates relative radial positional relationship among the cross sections 328a, 328b, 328c in the respective pressing portion 318a, maximum protrusion portion 318b and relief portion 318c from the axis C of the tap.

As shown in FIG. 15, in each lobe 318 in this fifth embodiment, the thread profile 328 has a trapezoidal shape formed by removing an apex from a triangular shape, and an amount of removal of the apex is changed such that thread profile 328a in the pressing portion 318a is changed in a direction toward the maximum protrusion portion 318b and such that the thread profile 328a in the relief portion 328c is changed in a direction away from the maximum protrusion portion 318b. The amount of removal of the apex is minimized in the maximum protrusion portion 318b. It is noted that the term "removal" here is used to describe the trapezoidal shape and does not refer to the manufacturing process.

In this fifth embodiment in which the thread forming tap 10 has the lobes 318, it is possible to obtain the same effect as in the above-described first embodiment.

### SIXTH EMBODIMENT

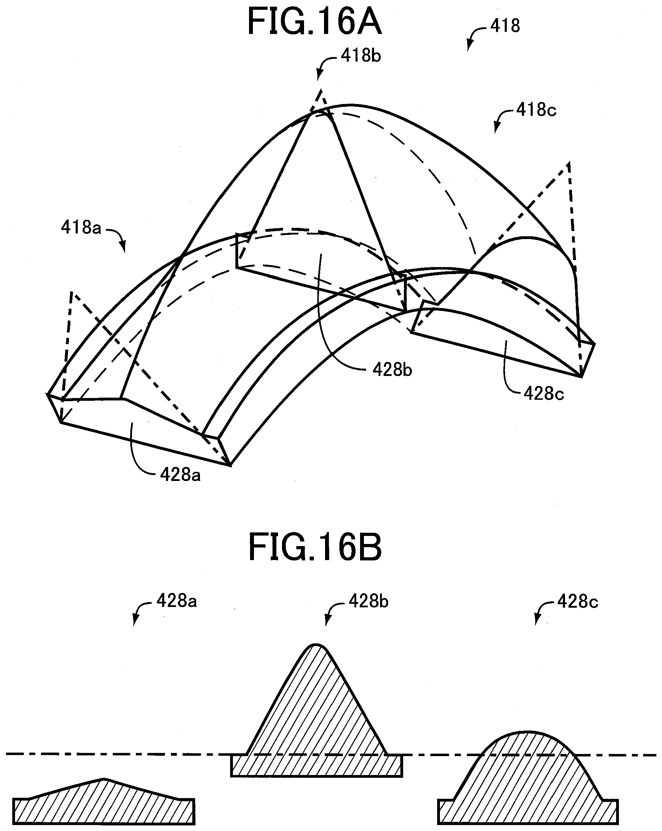

FIG. 16 is a set of views corresponding to the views of FIG. 3 in the above-described first embodiment, for explaining a cross sectional shape 428 of each lobe 418 in another embodiment of the present invention. FIG. 16(a) is a view for explaining change of the cross sectional shape in each of the pressing portion 428a, maximum protrusion portion 428b and relief portion 428c that are contiguous in the circumferential direction of the tap. FIG. 16(b) is a view showing cross sections 428a, 428b, 428c in the respective pressing portion 428a, maximum protrusion portion 428b and relief portion 428c, taken in respective planes containing the axis C of the tap. As in FIG. 3(b), in FIG. 16(b), a one-dot chain line represents a root diameter of the screw thread in the maximum protrusion portion 418b, and indicates relative radial positional relationship among the cross sections 428a, 428b, 428c in the respective pressing portion 418a, maximum protrusion portion 418b and relief portion 418c from the axis C of the tap.

As shown in FIG. 16, in each lobe 418 in this sixth embodiment, a manner of change of the thread profile 428a in the pressing portion 418a and a manner of change of the thread profile 428c in the relief portion 418c are different from each other. The manner of change of the thread profile 428a in the pressing portion 418a is substantially the same as in the above-described third embodiment shown in FIG. 13, and the angle of the crest portion of the thread profile 428a having a triangular shape is changed such that the angle of the crest portion of the thread profile 428b is the sharpest in the maximum protrusion portion 418b. On the other hand, the manner of change of the thread profile 428c in the relief portion 418c is substantially the same as in the above-described fourth embodiment shown in FIG. 14, and the thread profile 428 having a substantially triangular shape has a curved portion in the crest portion, and a radius of curvature of the curved portion is changed such that the radius of curvature of the curved portion is minimized in the maximum protrusion portion 418b and such that the radius of curvature of the curved portion is increased in the relief portion 428c in a direction away from the maximum protrusion portion 418b whereby the thread profile 428c in the relief portion 428c is changed.

In this sixth embodiment in which the thread forming tap 10 has the lobes 418, it is possible to obtain the same effect as in the above-described first embodiment.

In this sixth embodiment, the manner of change of the thread profile 428a in the pressing portion 418a is substantially the same as in the above-described third embodiment shown in FIG. 14, while the manner of change of the thread profile 428c in the relief portion 418c is substantially the same as in the above-described fourth embodiment shown in FIG. 15. However, the present invention is not limited to these details. That is, this sixth embodiment may be modified as needed as long as the manner of change of the thread profile 428a in the pressing portion 418a and the manner of change of the thread profile 428c in the relief portion 418c ae different from each other.

### SEVENTH EMBODIMENT

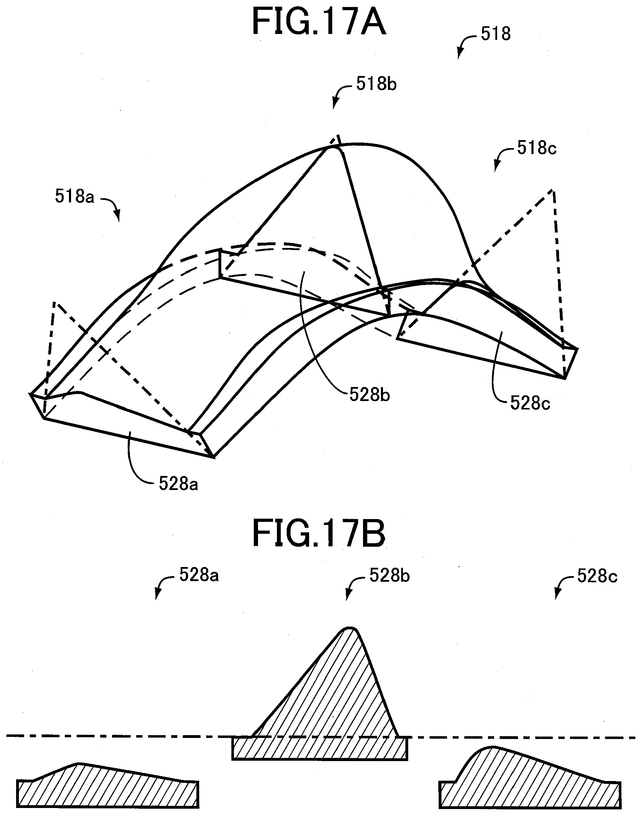

FIG. 17 is a set of views corresponding to the views of FIG. 3 in the above-described first embodiment, for explaining a cross sectional shape 528 of each lobe 518 in another embodiment of the present invention. FIG. 17(a) is a view for explaining change of the cross sectional shape in each of the pressing portion 518a, maximum protrusion portion 518b and relief portion 518c that are contiguous in the circumferential direction of the tap. FIG. 17(b) is a view showing cross sections 528a, 528b, 528c in the respective pressing portion 518a, maximum protrusion portion 518b and relief portion 518c, taken in respective planes containing the axis C of the tap. As in FIG. 3(b), in FIG. 17(b), a one-dot chain line represents a root diameter of the screw thread in the maximum protrusion portion 518b, and indicates relative radial positional relationship among the cross sections 528a, 528b, 528c in the respective pressing portion 518a, maximum protrusion portion 518b and relief portion 518c from the axis C of the tap.

As shown in FIG. 17, in each lobe 518 in this sixth embodiment, a manner of change of the thread profile 528a in the pressing portion 518a and a manner of change of the thread profile 528c in the relief portion 518c are different from each other, as in the above-described sixth embodiment shown in FIG. 16. The manner of change of the thread profile 528a in the pressing portion 518a is substantially the same as in the above-described third embodiment shown in FIG. 13, and the angle of the crest portion of the thread profile 528a having a triangular shape is changed such that the angle of the crest portion of the thread profile 528b is the sharpest in the maximum protrusion portion 518b. On the other hand, the manner of change of the thread profile 528c in the relief portion 518c is substantially the same as in the above-described fourth embodiment shown in FIG. 15, and the thread profile 528 having a substantially triangular shape has a curved portion in the crest portion, and a radius of curvature of the curved portion is changed such that the radius of curvature of the curved portion is minimized in the maximum protrusion portion 518b and such that the radius of curvature of the curved portion is increased in the relief portion 528c in a direction away from the maximum protrusion portion 518b whereby the thread profile 528c in the relief portion 528c is changed. In each lobe 418 in the above-described sixth embodiment shown in FIG. 16, the crest of the thread profile 428 is located in a center in lateral direction (i.e., the axial direction of the tap) in FIG. 16(b) in an entire circumferential range of each lobe 418 from the pressing portion 418a to the relief portion 418c via the maximum protrusion portion 418b. However, in each lobe 518 in this seventh embodiment shown in FIG. 17, the crest of the thread profile 528 is offset from the center to one side in lateral direction in FIG. 17(b). Specifically, in each lobe 518 in this seventh embodiment shown in FIG. 17, the crest of the thread profile 528a in the pressing portion 518a is offset from the center to left side, the crest of the thread profile 528b in the maximum protrusion portion 518b is offset from the center to right side, and the crest of the thread profile 528c in the relief portion 518c is offset from the center to left side. Thus, in each lobe 518, the crest of the thread profile 528 is moved in rightward direction in a range from the pressing portion 518a to the maximum protrusion portion 518b, and is moved in leftward direction in a range from the maximum protrusion portion 518b to the relief portion 518c.

In this seventh embodiment in which the thread forming tap 10 has the lobes 518, it is possible to obtain the same effect as in the above-described first embodiment.

Although some embodiments of the present invention have been described in detail above with reference to the drawings, the embodiments are merely some aspects of the invention, and the present invention can be embodied in various forms with various modifications and improvements based on knowledges of those skilled in the art.

For example, in the above-described first and second embodiments, a root-diameter relief amount, which corresponds to a radial distance from the root of the screw thread in the maximum protrusion portion to the root of the screw thread in the relief portion, is zero. However, the root-diameter relief amount does not necessarily have to be zero but may be other than zero, as long as the root-diameter relief amount is smaller than a crest-diameter relief amount and/or an intermediate-diameter relief amount, wherein the crest-diameter relief amount corresponds to a radial distance from the crest of the screw thread in the maximum protrusion portion to the crest of the screw thread in the relief portion, and wherein the intermediate-diameter relief amount corresponds to a radial distance from an intermediate between the crest and the root in the maximum protrusion portion to that in the relief portion. This feature can contribute to a construction of the thread forming tap which provides a high durability.

In the above-described first through seventh embodiments, the thread profile has a generally triangular shape that is symmetrical. However, the invention is not limited to this detail. The thread profile may have an asymmetrical shape with the crest of the thread profile being offset from the center to one side in the axial direction of the tap 10, as the thread profiles 528a, 528b, 528c in the respective pressing portion 518a, maximum protrusion portion 518b and relief portion 518c in the above-described seventh embodiment shown in FIG. 7. With the thread profile having the asymmetrical shape, it is possible to machine an internal thread that corresponds to a buttress screw, for example.

The thread forming tap of the present invention is to be screwed into a prepared hole in a workpiece by causing the leading part to be first introduced into the prepared hole, and then the plurality of protrusion portions are caused to bite into an inner surface wall of the prepared hole, whereby the inner surface wall of the prepared hole is plastically deformed so as to form an internal thread. The thread forming tap may have various configurations. For example, the thread forming tap may include a drill or reamer portion in its distal end portion so that the prepared hole can be formed by the drill or reamer portion, and may be provided integrally with inside-diameter finishing cutting edges or pressing lobes so that an inside diameter of the internal thread can be finished by the inside-diameter finishing cutting edges or pressing lobes.

It is preferable that the plurality of protrusion portions are arranged in three or more rows that are spaced at equal intervals in the circumferential direction of the thread forming tap such that the protrusion portions of each of the three or more rows are contiguous in the direction parallel to the axis of the tap. However, the thread forming tap may have various configurations. For example, the protrusion portions of each of the three or more rows may be contiguous in a helical direction of the tap. Further, the three or more rows of the protrusion portions may be spaced at unequal intervals. Moreover, oil groove or grooves may be provided to extend in the axial direction to divide the thread portions, for supplying a cutting fluid.

Since the thread forming tap does not cutting chips, it is possible to satisfactorily tap both a blind hole and a through-hole to form an internal thread. The present invention is effective to reduce friction torque and heat generation without reducing durability of the protrusion portions, thereby suppressing adhesion and improving the tool life, even when forming an internal thread under conditions that are prone to adhesion, such as high-speed machining or using a low-lubricating fluid (such as water-soluble cutting fluid). It goes without mentioning that it is also possible to form an internal thread at a low speed or to use a high-lubricating fluid (such as water-insoluble cutting fluid) having relatively high lubricating property.

The present invention relates to shapes of the protrusion portions provided in the thread portion of the thread forming tap. There is no particular limitation on a method of manufacturing the thread forming tap. Therefore, the present invention can also be applied to cases where the thread portion of the thread forming tap is formed through a manufacturing technique using a tool other than a grinding wheel.

The thread forming tap of the present invention is not limited to the above-described base material, but can be made of a tool material such as cemented carbide and ceramics. The tap may be coated, as needed, with a hard coating such as a compound coating of TiN, TiCN, TiAlN or CrN, a DLC (Diamond-Like Carbon) coating, or a diamond coating. Further, the tap may be subjected to steam treatment, nitriding treatment or other treatment.

### DESCRIPTION OF REFERENCE SIGNS

10: thread forming tap
12: shank portion
14: thread portion
16: screw thread
18: lobe
18a: pressing portion
18b: maximum protrusion portion
18c: relief portion
22: leading part
24: complete thread part
26: root
28: thread profile
28a: thread profile in pressing portion
28b: thread profile in maximum protrusion portion
28c: thread profile in relief portion
30: rectangle (upper limit of range of change of thread profile)
30a: top edge
30b: bottom edge
30c: left edge
30d: right edge

## Claims

1. A thread forming tap comprising a thread portion that includes a complete thread part and a leading part, the leading part being contiguous to the complete thread part and having a diameter that is reduced as the thread forming tap extends toward a distal end of the thread forming tap, the thread portion being provided with a plurality of lobes that are arranged in a circumferential direction of the thread forming tap,
the thread forming tap being **characterized in that**
each of the lobes includes a pressing portion, a maximum protrusion portion and a relief portion that are arranged in the circumferential direction, and
the thread portion has a thread profile in a cross section containing an axis of the thread forming tap, the thread profile being changed in the circumferential direction in at least one of the pressing portion and the relief portion of each of the lobes.

2. The thread forming tap according to claim 1, being **characterized in that** the thread profile is changed in the circumferential direction in the pressing portion of each of the lobes.

3. The thread forming tap according to claim 1 or 2, being **characterized in that** a root-diameter relief amount is smaller than a crest-diameter relief amount in the thread portion.

4. The thread forming tap according to claim 1 or 2, being **characterized in that** a crest-diameter relief amount is larger than an intermediate-diameter relief amount in the thread portion.
